# EUROPEAN PATENT APPLICATION

(11) **EP 2 161 876 A1**
(43) Date of publication of application: **10.03.2010**
(21) Application number: 08163743.1
(22) Date of filing: 05.09.2008
(51) Int. Cl.: H04L 12/24, G06F 3/12

(54) **Peer-based configuring of a network computer-peripheral device**

(71) Applicant: Océ-Technologies B.V., 5914 CA Venlo (NL)
(72) Inventor: The designation of the inventor has not yet been filed
(74) Representative: van Meeteren, Arend Anthonie

(57) **Abstract**

Network computer-peripheral device, such as a printer or a scanner, comprising a configuration tool for programming network settings into the device, wherein the device is adapted to execute the configuration tool itself. The configuration tool is adapted to scan the network for a peer computer-peripheral device, such as a like printer or a scanner, that has already been configured.

## Description

The present invention relates to a network computer-peripheral device, adapted to program network settings into the device. The present invention furthermore relates to a method for configuring a network computer-peripheral device, such as a printer or scanner or a similar multi-function device. The term "configuring" is used here for installing and setting up the device, in other words, preparing it for its intended use.

When a printer/scanner or similar multi-function device (MFD) is installed at a customer site, after being physically placed at the desired location, and connected to the local network, it must be configured to cooperate with the various services that together form the customer's network environment, such as print servers, LDAP servers, mail servers, etc. This is necessary for the communication needed for the MFD's intended usage, like receiving print jobs from workstations or print servers, exporting scan jobs to file servers or to e-mail addresses, MFD management from control applications, user identification and user authentication by database, and so on.

According to the state of the art, a network computer-peripheral device is physically connected to a local network and afterwards configured using an installation tool present on a computer connected to the computer-peripheral device via the network. Such an installation tool discovers the newly connected device on the network and then configures it for communication with the network environment.

A disadvantage of this known procedure is that it takes two separate steps, usually even at different locations, and that it requires access to a computer on the network, for configuring the device. In general, access to a computer on the network is restricted to a local IT administrator, and the physical installation of the device is performed by a mechanic. A further disadvantage is that configuring of a network computer-peripheral device is considered as a difficult technical task, that requires more than average knowledge of IT infrastructure, and requires a lot of specific location- and network-dependent data, which may not be easily available or accessible to all. It is therefore a goal of the present invention to simplify the procedure for configuring a network computer-peripheral device.

The invention proposes a network computer-peripheral device according to claim 1, and a method for configuring such a device according to claim 12.

The network computer-peripheral device may for example be a printer or scanner, in particular an MFD, comprising a configuration tool for programming network settings into the device, **characterised in that** the device further comprises scanning means for scanning a computer network for identifying a configured peer device, wherein the configuration tool is adapted to retrieve at least one network setting from a configured peer device on the network, and wherein the configuration tool is adapted for programming the retrieved at least one network setting into the device, and wherein the device itself is adapted to execute the configuration tool. The device may be configured to initialise the scanning means and the configuration tool upon powering-up the device, and the scanning means may, for example, be adapted to perform a DNS query, or an IP-range scan. However, it is also conceivable for a person skilled in the art to apply scanning means which are adapted to perform other kinds of scanning techniques, such as, for example, multicast DNS (mDNS).

The network computer-peripheral device according to the present invention thus offers the advantage that it can be installed (i.e. both physically connected and configured) in one single procedure, to be performed on the spot of the new device itself, and no access to computers on the network is required. It is noted that a device may be connected to the network by a physical connection (a cable) or a wireless connection, such as IR, bluetooth, WIFI, etc.

In order to receive configuration settings, the configuration tool is adapted to request at least one network setting from a configured peer device it has found during the scan of the network. The device may also collect the settings it needs from a plurality of devices it has found, when there is no peer device that provides all settings needed. The configuration settings of various devices found can also be used to determine the most likely value for configuring the device. The device may also choose to use self assigned values based on the environment it discovers, for instance 'printer3'for its own hostname if the hostname 'printer1 and 'printer2' are found to be existent.

A peer device is to be understood here as any device that requires at least partly the same properties to be configured, in order to be operational. Peer devices are therefore not limited to devices with the same actual purpose (e.g. printing, scanning or offering a network service). Therefore devices that seem unequal in a functional way, like a printer and a scan server, may in fact share many configuration items and so they are regarded as peers within the scope of this patent application.

For the method according to the present invention it is desired that a peer device is discoverable, because it advertises its own presence because it is referenced by one or more servers in a network infrastructure.

An already configured peer device must state its own identity, as a reply on a query or as a part of the advertisement referred to in the above, to enable newly installed devices to check its characteristics, i.e. its manufacturer, type, model and installation date. Said newly installed device must be able to initiate a query thereto, and understand the reply.

A newly installed device must be able to interpret the received configuration, possibly coming from more than one peer, and use this for its own. A configured peer device may also query other peers to stay informed on any external change that may be of interest. Part of the configuration may be a list of peer devices the queried peer knows of.

The configuration tool of the device is adapted to scan the network for a peer computer-peripheral device, such as a printer or a scanner, that has already been configured. The configuration settings of an MFD can be divided into two types of settings. Settings that are the same for all devices on the network, and settings that are device-specific. By finding a peer computer-peripheral device, the common settings can be easily retrieved from the device found. In some cases there are no device specific settings, and the device can be configured by copying all common settings from the peer device. But also when there are device-specific settings, the time and effort required to configure the device is largely reduced by retrieving at least some settings from a peer device.

In order to use the settings found, the device can be adapted to configure itself according to a setting received from the peer device, that is, to update its network settings with a copy of at least a part of the network settings of a peer device on the network.

The device can be adapted to do so straight away, or upon confirmation of a user. It may furthermore be adapted to update its configuration with a copy of at least a part of the configuration settings of a peer device on the network, or with the entire set of settings.

Updating its configuration can be done upon powering up the device, when no or incomplete configuration details are present, or upon detection of a more recent configuration of a peer device. Thereto, the device may be adapted to scan the network for more recent configurations on a regular basis, such as once a week, once a day, or upon start-up.

The following settings may be of importance for the configuration: a DHCP (Dynamic Host Configuration Protocol) server; an SMB (Server Message Block) server; a unicast or multicast DNS (Dynamic Name Server); an LDAP (Lightweight Directory Access Protocol) server; a mail server; a proxy server; a logon name; a password; or an e-mail address. Commonly, the following settings will be of major importance to realise at least a basic configuration: SMB settings and/or server; a LDAP server including the organization of its database; and a mail server including the maximum e-mail size. These are all true network settings, i.e., they relate to the network infrastructure the device has to work in. Furthermore, device-specific settings that are applied throughout the network, may be copied from a peer device as well. These settings may for example comprise paper- and/or envelope sizes, printer-tray settings, power-settings etc. In addition, accounting data and settings and user-specific preferences may be copied from peer devices and configurated. Those settings are expressly meant to be also comprised in the term "network settings" as specified in the preamble and the claims.

During scanning of the network, the device may be adapted to compile a list of peer devices present on the network, or of settings of one or more peer devices found present. Based on the settings of a plurality of devices, the most likely settings for the device can be estimated.

The device may further comprise a local user interface including visualising means such as a display for displaying the list to provide a choice from which peer device configuration settings shall be copied.
The local user interface may also be used to confirm or, if several different settings have been retrieved, to select settings retrieved during a network-scan. It may also comprise a webserver for generating a website including a user interface for external operation or status checking of the device.

To cooperate with other devices, and to configure other devices based on its own settings, the device may be adapted to send configuration settings to a peer device on a network. This can especially be done when the peer device sends a request, after it has found the device, for example during a network scan, or spontaneously when a new device announces itself.

The invention will now be explained into more detail with reference to the drawing, in which:
- Figure 1 shows the configuration of an MFD based on the configuration of a peer device in accordance with the invention; and
- Figure 2 shows the discovery of network configuration candidates.

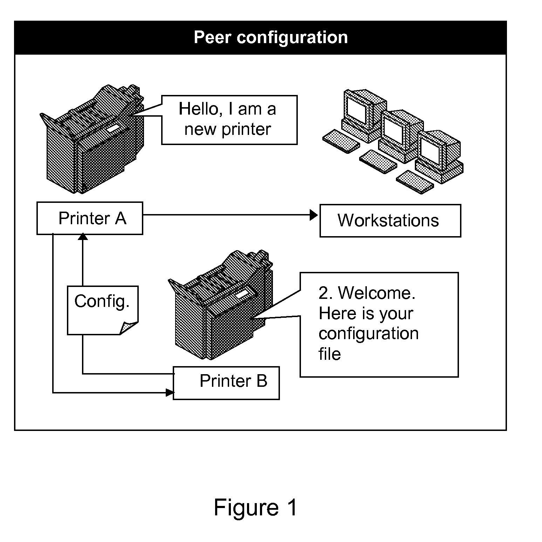

Figure 1 shows an example of peer-based configuration. When a new device (Printer A) connects to the network, it announces itself to other devices (Printer B, Workstations) in the network and it receives a configuration file (Config) as a response from one of its peers (Printer B). With this configuration file, the new device (Printer A) configures itself and thus it relieves the network administrator from this time-consuming task. Furthermore, a device that announces itself doesn't have to be registered manually at any print server or other central administration point. This contributes to a dynamic and scalable network with reduced complexity.

If the announcement of a new device is unsuccessful (no peer devices anwer), then the new device may itself try and discover peer devices. To accomplish this, queries may be performed on, among others, DHCP- (Dynamic Host Configuration Protocol), SMB-(Service Message Block) servers, and unicast or multicast DNS (Dynamic Name Server) servers.

In the queries the characteristics of the peers of interest may be embedded, for instance an multicast DNS query as defined in RFC2782 can specificly ask for Océ Common Exchange Protocol service types. This will yield a list of relevant candidates for the peer to peer configuration exchange, along with information on how to contact such a service. In order to measure the usability of the configuration on it, each peer device may be queried for manufacturer, product, model and/or version information. A peer device may be queried abouts its knowledge on the network infrastructure, especially on its knowledge on other existing devices, this forms the base of a recursive search and this may result in a larger list of peer MFDs.

Having found peer devices (by spontaneous response or by discovery), the new device may retrieve from these peer devices the settings for communicating with the LDAP server(s), email server(s), SMB server(s) and others may be retrieved. These settings usually consists of a network hostname, a port number, a login username and a password, and possible server dependend settings like the maximum email size an email server can handle.
Furthermore, device specific settings that are applied throughout the network, may be copied from the peer device as well. These settings may for example comprise paper-and/or enveope formats, printer-tray settings, security settings, power settings, etc.

Other applications for this scenario are, for example, driver updates. Administrators only need to update one device and their peer devices will update themselves. The exemplary driver spread like a virus over the network, 'infecting' all devices with updates.

With this scenario, updates can be made at a single point in the network and must not be made at each single device. Moreover, an administrator can choose any device to do the updates; from his own workstation, but also from a mobile handheld device for example. End-users do no longer need to install drivers or other updates for the printer or update their drivers when a new version is available. The device may update its configuration with a copy of at least a part of the configuration settings, i.e. the non-device specific-settings, of a peer device on the network, or with the entire configuration. The device may also update its configuration upon detection of a more recent configuration of a peer device, or be configured to scan the network for more recent configurations on a regular basis, such as once a month, once a week or once a day, for example. Configurations may for that purpose be marked with a time-stamp.

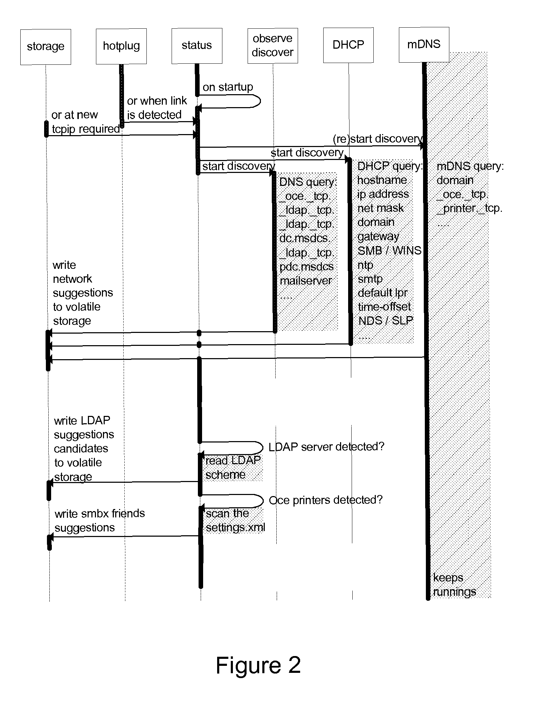

Figure 2 shows the steps taken during discovery of network configuration candidates. The term 'discovery' is used here for a collection of specialized mechanisms, each taking care of one aspect of the entire process. The entire discovery, or parts of it, may be started at the moment the device wakes up, and at the moment a user interface explicitly requests for it, or at the moment the network cable is removed and attached again, as the device might be connected to another (part of the) network then.

When started, discovery will start the specialized mechanisms, such as one that asks the DNS server for values which are intentionally present there for this purpose, see RFC2782: A DNS RR for specifying the location of services (DNS SRV), or one that asks the DNS server for often used names for specific servers, like "mail server", or one that asks the DHCP server for intentionally configured values like the default printer, or one that monitors the network environments by means of the mDNS protocol, and others, i.e. for SMB for finding peers. Some specialized mechanisms will perform in a limited amount of time to be useful in user interactions, and others will be started and continue and will also monitor runtime changes in the network infrastructure.
The results are collected constantly and can be used to launch a new specialized mechanism, i.e. if a population management server is detected, a specialized mechanism is started that can collaborate with such a server. More concretely, in case an LDAP server is found, an operation request will be sent to the LDAP server to provide more relevant configuration related information.

While the present invention has been explained with reference to the above-described embodiments, it will be clear to the skilled person that the same may be implemented in various other ways. The scope of protection of the patent is defined by the appended claims and encompasses everything the skilled person understands thereby.

## Claims

1. Network computer-peripheral device, such as a printer or a scanner, comprising:
- a configuration tool for programming network settings into the device,
**characterised in that**
- the device further comprises scanning means for scanning a computer network for identifying at least one configured peer device and for retrieving at least one network setting from the identified configured peer device incorporated in said computer network, wherein
- the configuration tool is adapted for programming the at least one retrieved network setting into the device, and
- the device itself is adapted to execute the configuration tool.

2. Device according to claim 1, **characterised in that** the device is adapted to initialise the scanning means and the configuration tool upon powering-up the device.

3. Device according to claim 1 or 2, **characterised in that** the scanning means are adapted to perform a DNS query, or an IP-range scan.

4. Device according to any of the preceding claims, **characterised in that** the device is adapted to update its network settings with a copy of at least a part of the network settings of a peer device on the network.

5. Device according to claim 4, **characterised in that** the device is adapted to update its network settings upon detection of more recent network settings of a peer device.

6. Device according to claim 5, **characterised in that** the device is adapted to scan the network for more recent network settings on a regular basis, such as once a week.

7. Device according to any of the preceding claims, **characterised in that** the device is adapted to retrieve at least one of the following network settings:
- a DHCP (Dynamic Host Configuration Protocol) server;
- an SMB (Server Message Block) server;
- a unicast or multicast DNS (Dynamic Name Server);
- an LDAP (Lightweight Directory Access Protocol) server;
- a mail server;
- a proxy server;
- system-wide device-specific settings;
- system-wide user-specific settings.

8. Device according any of the preceding claims, **characterised in that** the device is adapted to compile a list with peer devices discovered on the network.

9. Device according to any of the preceding claims, **characterised in that** the device comprises a local user interface including visualising means, such as a display, for displaying information from the configuration tool.

10. Device according to any of the preceding claims, **characterised in that** the device is adapted to send at least one configuration setting to a peer device on a network.

11. Method for configuring a network computer-peripheral device, in particular a computer-peripheral device, **characterised by**:
- scanning a computer network in which the device is incorporated for identifying at least one configured peer device,
- retrieving at least one network setting from at least one identified configured peer device,
- executing a configuration tool on the device itself, and
- programming the at least one retrieved network setting into the device by the configuration tool.

12. Method according to claim 11, **characterised by** automatically synchronizing at least one network setting of the device with at least one corresponding network setting of at least one configured peer device.

13. Method according to claim 11, **characterised by** updating at least one setting of the device upon retrieval of at least one corresponding more recent setting of a peer device.

14. Method according to claim 11, **characterised by** scanning the computer network for more recent configurations periodically, such as once a week.
